# EUROPEAN PATENT APPLICATION

(11) **EP 4 752 042 A1**
(43) Date of publication of application: **03.06.2026**
(21) Application number: 25218377.7
(22) Date of filing: 25.11.2025
(51) Int. Cl.: B62D 35/00, B62D 37/02

(54) **MOVING ASSEMBLY FOR AN AIRFOIL OF MOTOR VEHICLE**

(30) Priority: 28.11.2024 IT 202400026946
(71) Applicant: FERRARI S.p.A., 41100 Modena (IT)
(72) Inventor: BORSARI, Fabrizio, 41100 MODENA (IT); MULTARI, Daniele, 41100 MODENA (IT)
(74) Representative: Studio Torta S.p.A.

(57) **Abstract**

A moving assembly (3, 3') for an airfoil (10) of a car (1) is described, comprising an airfoil (10) comprising a first portion (11) and a second portion (12); a support structure (15) which can be fixed to the motor vehicle (1) and with respect to which the airfoil (10) is movable to vary its angle of attack with respect to the air; a first actuator (20, 20') articulated on the support structure (15); a first lever (25) operatively connected to the second portion (12) of the airfoil (10) and to the first actuator (20, 20'); a second lever (30) articulated on the support structure (15) and on which the first portion (11) of the airfoil (10) is articulated; and a second actuator (35), which can be operated to determine the rotation of the second lever (30) with respect to the support structure (15); the first actuator (20, 20') comprises a case (37) and a piston (36) telescopically coupled to one another according to a first axis (J); the first lever (25) is articulated on the piston (36).

## Description

### CROSS-REFERENCE TO RELATED APPLICATIONS

This patent application claims priority from Italian patent application no. 102024000026946 filed on November 28, 2024, the entire disclosure of which is incorporated herein by reference.

### TECHNICAL FIELD

The present invention relates to a moving assembly for moving an airfoil of a motor vehicle, in particular a performance motor vehicle.

The present invention also relates to a method for adjusting the angle of attack of an airfoil of a motor vehicle.

### BACKGROUND

Performance motor vehicles comprise, as is well known, a body with a spoiler arranged above the rear wheels.

In a known way, the spoilers have an airfoil configured so as to generate the following aerodynamic forces, following the interaction with the air current according to a normal travel direction of the motor vehicle:
- a resistance directed parallel to the travel direction and in the opposite direction to the travel direction of the motor vehicle; and
a downward downforce.

In a known manner, the resistance and downforce generated by the spoiler are increasing as the angle of attack of the airfoil with respect to the air increases.

The downforce increases the overall load acting on the rear wheels and consequently allows to reduce the braking spaces along a straight path and to increase the speed of travel in curves with the same radius of curvature of the curve itself.

It is, therefore, desirable to configure the spoiler so that the relative angle of attack is sufficiently high to achieve a high downforce value.

However, increasing the angle of attack of the airfoil of the spoiler also increases the drag, decreasing the maximum speed achievable and increasing the consumption of the motor vehicle.

The need is felt in the sector to be able to increase the overall downforce of the motor vehicle during curved trajectories and when braking, without increasing the overall resistance in the travel of the motor vehicle, using as few additional components as possible.

### SUMMARY

Aim of the present invention is the realization of a moving assembly for moving an airfoil of a motor vehicle, which allows to satisfy at least one of the aforementioned needs.

The aforesaid aim is achieved by the present invention, as it relates to a moving assembly for moving an airfoil of a motor vehicle as defined in Claim 1.

The present invention also relates to a method for adjusting the angle of attack of an airfoil of a motor vehicle as defined in claim 11.

### BRIEF DESCRIPTION OF THE DRAWINGS

For a better understanding of the present invention, two preferred embodiments are described below, by way of non-limiting example and with reference to the accompanying drawings, wherein:
- Figure 1 is a perspective view of a motor vehicle comprising a moving assembly for moving an airfoil realized according to the dictates of the present invention;
- Figure 2 shows a moving assembly according to a first embodiment of the invention in a first operating configuration;
- Figure 3 shows the moving assembly of Figure 2 in a second operating configuration;
- Figure 4 shows the moving assembly of Figures 2 and 3 in a third operating configuration;
- Figure 5 shows the moving assembly of Figures 2 to 4 in a fourth operating configuration;
- Figure 6 shows a moving assembly according to a second embodiment of the invention in a first operating configuration;
- Figure 7 shows the moving assembly of Figure 6 in a second operating configuration;
- Figure 8 shows the moving assembly of Figures 6 and 7 in a third operating configuration; and
- Figure 9 shows the moving assembly of Figures 6 to 8 in a fourth operating configuration.

### DESCRIPTION OF EMBODIMENTS

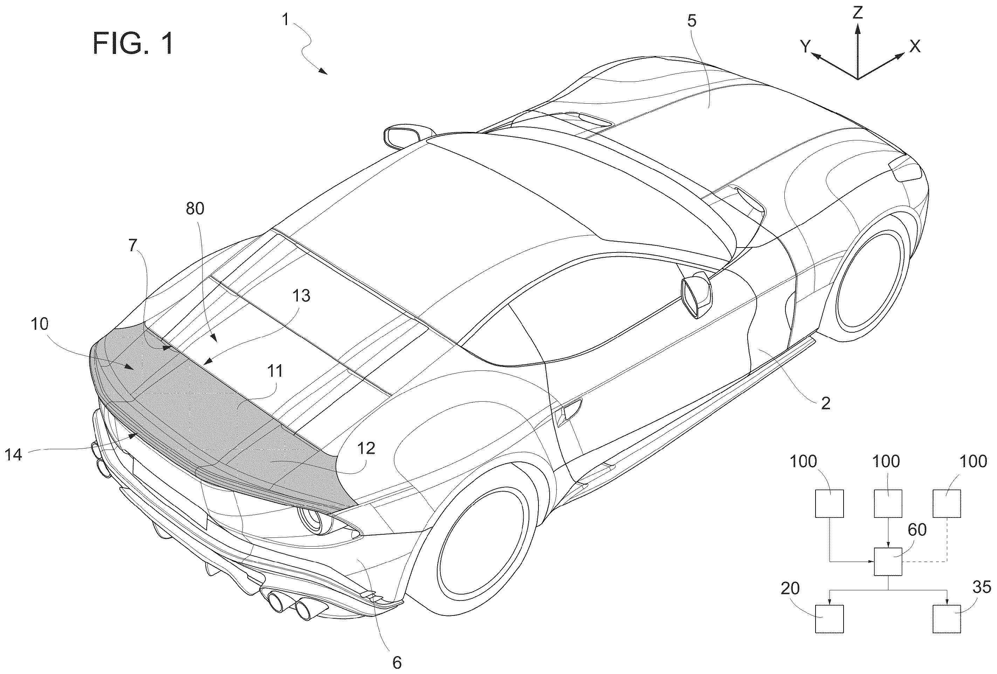

With reference to Figure 1, 1 denotes a motor vehicle comprising a body 2 defining a passenger compartment.

It is also possible to define:
- a longitudinal axis X integral with the body 2, arranged, in use, horizontal and parallel to a normal travel direction of the motor vehicle 1 indicated in Figure 1;
- a transverse axis Y integral with the body 2, arranged, in use, horizontal and orthogonal to the axis X; and
- an axis Z integral with the body 2 and arranged, in use, vertical and orthogonal to the axes X, Y.

The body 2 comprises, in turn, a front 5 and a rear 6 opposite one another parallel to the axis X.

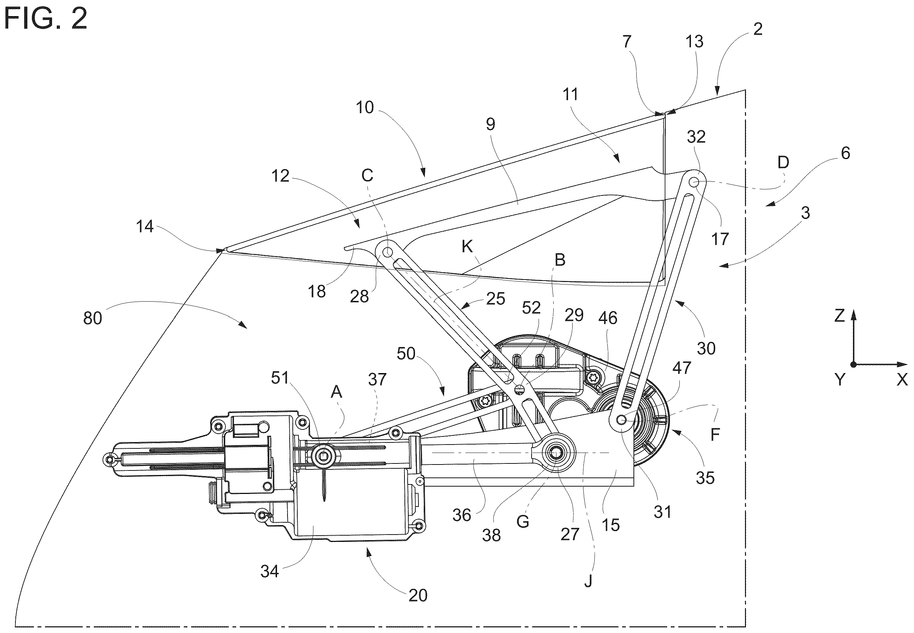

The motor vehicle 1 further comprises:
- an airfoil 10 arranged in the area of an edge 7 of the body 2;
- a bracket 9 to which the airfoil 10 is fixed and comprising a front end 17 and a rear end 18.
- a movement assembly 3 (shown in Figures 2 to 5) which can be operated to move the airfoil 10 between a neutral position, a first operating position and a second operating position.

In more detail, the airfoil 10 comprises a pair of front and rear end edges 13, 14, respectively.

The airfoil 10 further comprises, proceeding from the end edge 13 towards the end edge 14, a portion 11 and a portion 12 arranged behind the portion 11.

The ends 17, 18 of the bracket 9 are fixed respectively to the portions 11, 12 of the airfoil 10.

In the case shown, the rear 6 of the motor vehicle 1 defines the edge 7 parallel to the axis Y, and the airfoil 10 is arranged in the area of the edge 7.

In the neutral position shown in Figure 2, the end edge 13 of the airfoil 10 is arranged flush with the edge 7 of the rear 6, and the airfoil 10 has a first angle of attack with respect to the air current.

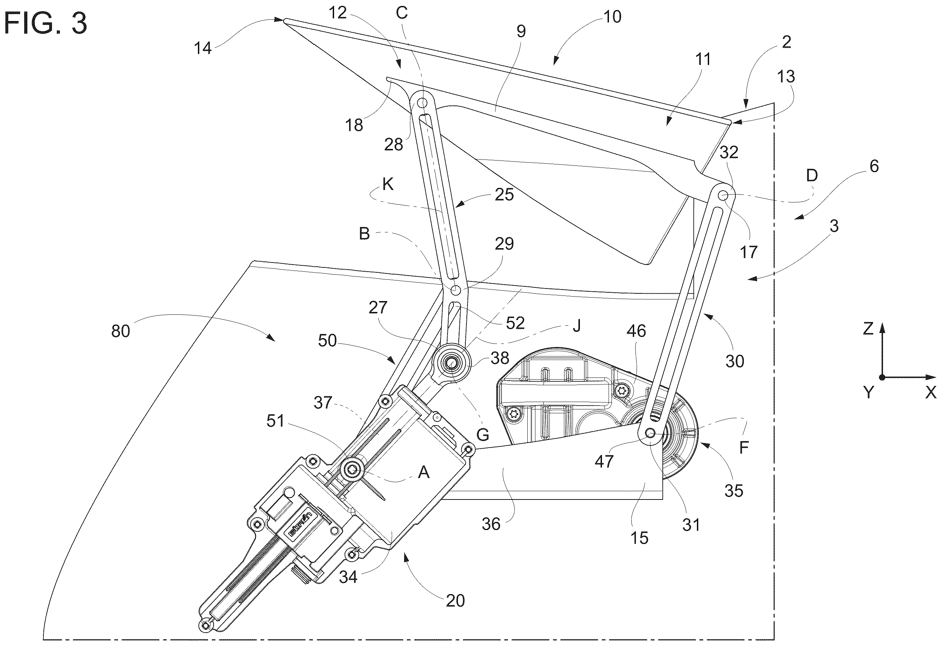

In the first operating position (Figure 3), the airfoil 10 has a second angle of attack different from the first angle of attack with respect to the air current and corresponding to an increase in the downforce generated parallel to the axis Z with reference to the neutral position.

In particular, the end edge 14 of the airfoil 10 is arranged above the end edge 13 of the airfoil 10 itself, in the first operating position.

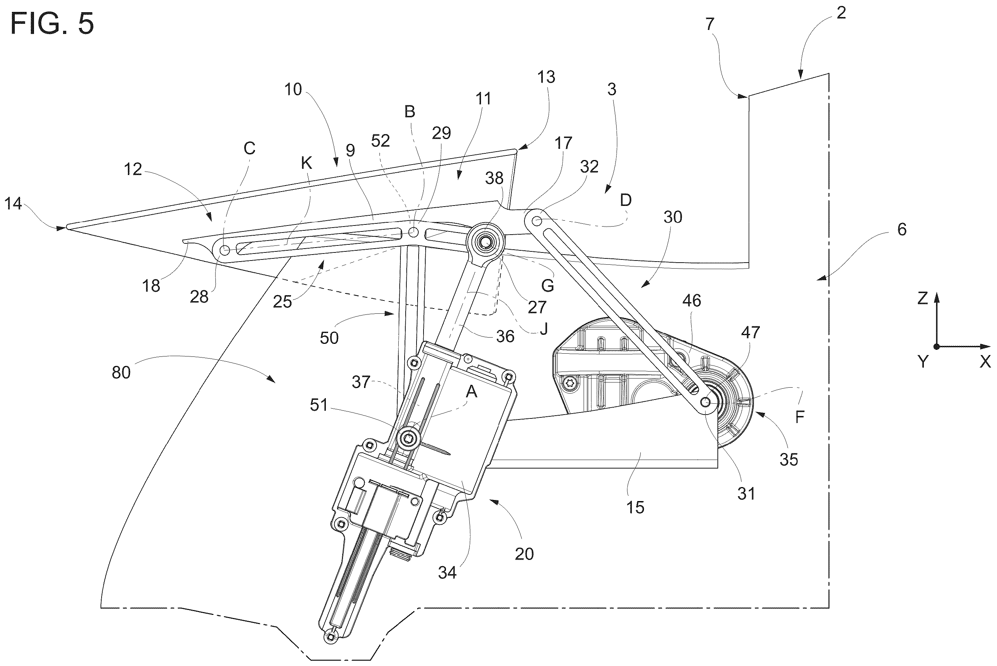

In the second operating position (Figure 5), the airfoil 10 has a third angle of attack different from the first angle of attack with respect to the air current and corresponding to a decrease in the travel resistance, generated parallel to the axis Y with reference to the neutral position.

In particular, the airfoil 10 is retracted at the back in the second operating position with respect to the neutral position.

The moving assembly 3 comprises, in particular, a bracket 15 fixed to the rear 7 of the motor vehicle and with respect to which the airfoil 10 is movable.

Advantageously, the moving assembly 3 comprises, in turn (Figures 2 to 5):
- a linear actuator 20 articulated on the bracket 15;
- a lever 25 operatively connected to the portion 12 of the airfoil 10 and to the actuator 20;
- a lever 30 articulated on the bracket 15 and on which the end 17 of the bracket 9 is articulated; and
- a rotary actuator 35 which can be operated to determine the rotation of the lever 30 with respect to the bracket 15;
the actuator 20 comprises, in turn, a casing 34 defining a case 37 and a piston 36 telescopically coupled according to an axis J, and the lever 25 is articulated on the piston 36.

The moving assembly 3 also comprises a lever 50 articulated on the bracket 15 and on which the lever 25 and the case 37 of the actuator 20 are articulated.

In more detail, the bracket 15 extends parallel to the axis X.

The lever 50 comprises, in turn, an end 51 hinged to the bracket 15 around an axis A and an end 52 opposite the end 51.

The casing 34 is hinged to the bracket 15 around the same hinge axis A of the lever 50.

The piston 36 comprises, in turn, a first end housed inside the case 37 and an end 38 opposite the first end.

The end 38 is hinged to the lever 25 around an axis G.

The actuator 20 can be selectively actuated to command the displacement of the piston 36 with respect to the case 37 parallel to the axis J, so as to increase or decrease the free length of the piston 36 on the outside of the case 37.

The lever 25 extends along an axis K and comprises, in turn:
- an end 27 hinged to the end 38 of the piston 36;
- an end 28 opposite the end 27 and hinged to the end 18 of the bracket 9 around an axis C; and
- a portion 29 interposed between the ends 27, 28 along the axis K and on which the end 52 of the lever 50 is hinged around an axis B.

The lever 30 comprises, in turn:
- an end 31 hinged around an axis F to the bracket 15; and
- an end 32 opposite the end 31 and hinged around an axis D to the end 17 of the bracket 9.

The actuator 35 comprises, in turn:
- a housing 46 fixed to the bracket 15; and
- an output shaft 47 rotatable around the axis F with respect to the housing 46 and integral with the end 31 of the lever 30.

In the case shown, the axis F is arranged in front of the axis A. The axis D is arranged in front of the axis C.

The axes A, B, C, D, F and G are parallel to one another and to the axis Y.

The axes J, K are orthogonal to the axes A, B, C, D, F, G and Y.

In the first neutral position (Figure 2), the axis C is arranged behind the axis D and the axis G is interposed between the axes C and D parallel to the axis X.

Consequently, the reduction of the free length of the piston 36 on the outside of the case 37 determines the rotation of the lever 25 in a first direction (counterclockwise in Figures 2 to 5) around the movable axis B with respect to the bracket 15 and the lifting of the portion 12 with respect to the portion 11 around the axis D.

In the neutral position, the airfoil 10 extends behind the axis D. In this way, the rotation of the lever 30 in the first direction (counterclockwise in Figure 5) determines the sliding of the airfoil 10 behind the edge 7.

In the case shown, the bracket 15 and the moving assembly 3 are housed inside a hood 80 defined by the rear 6 of the motor vehicle 1.

The motor vehicle 1 further comprises:
- a plurality of sensors 100 (only schematically shown in Figure 1) adapted to detect respective significant quantities of the trajectory and speed of the motor vehicle 1 itself; and
- a control unit 60 (also only schematically shown in Figure 1) programmed to receive, as an input, the quantities detected by the sensors 100.

The control unit 60 is also programmed to:
- process, on the basis of the quantities detected by the sensors 100, a first command signal associated with the need to increase the downforce parallel to the axis Z acting on the motor vehicle 1 with respect to the value generated when the airfoil 10 is in the neutral position or a second command signal associated with the need to reduce the drag of the motor vehicle with respect to the value generated when the airfoil 10 is in the neutral position;
- command the actuator 20 to reduce the free length of the piston 36 on the outside of the case 37 and keep the actuator 35 deactivated, in case of processing the first signal; and
- command both the actuator 20 to reduce the free length of the piston 36 on the outside of the case 37 and the actuator 35 to apply a torque in the first direction (counterclockwise in Figure 5) around the axis F on the output shaft 47, in case of processing the second signal.

In particular, in case of processing the second signal, the control unit 60 preferably at first operates the actuator 20 and keeps the actuator 35 deactivated and subsequently operates the actuator 35 and keeps the actuator 20 deactivated. Alternatively, the control unit 60 at first operates the actuator 20 and keeps the actuator 35 deactivated for a first time interval and subsequently activates both actuators 20, 35 in a second time interval following the first time interval.

The operation of the moving assembly 3 is shown starting from the condition of Figure 2 in which the airfoil 10 is in the neutral position and has the first angle of attack.

In this condition, the end edge 13 of the airfoil 10 is flush with the edge 7 of the rear 6 of the body 2, the axis C is arranged behind the axis D, and the axis B interposed between the axes C, G along the axis X.

The control unit 60 receives from the sensors 100 the quantities detected and associated with the trajectory and speed of the motor vehicle 1.

If it processes the first command signal associated with the need to increase the downforce parallel to the axis Z acting on the motor vehicle 1 with respect to the value generated when the airfoil 10 is in the neutral position, the control unit 60 commands the actuator 20 to reduce the free length of the piston 36 on the outside of the case 37 and leaves the actuator 35 inactive.

Consequently, the actuator 20 and the lever 50 rotate counterclockwise, the lever 25 rotates clockwise, with reference to Figure 2, determining the rotation of the airfoil 10 clockwise around the fixed axis D, until reaching the second operating position shown in Figure 3.

If it processes the first command signal associated with the need to increase the drag parallel to the axis Z acting on the motor vehicle 1 with respect to the value generated when the airfoil 10 is in the neutral position, the control unit 60 commands the actuator 20 to reduce the free length of the piston 36 on the outside of the case 37 and leaves the actuator 35 inactive, until the third position shown in Figure 3 is reached.

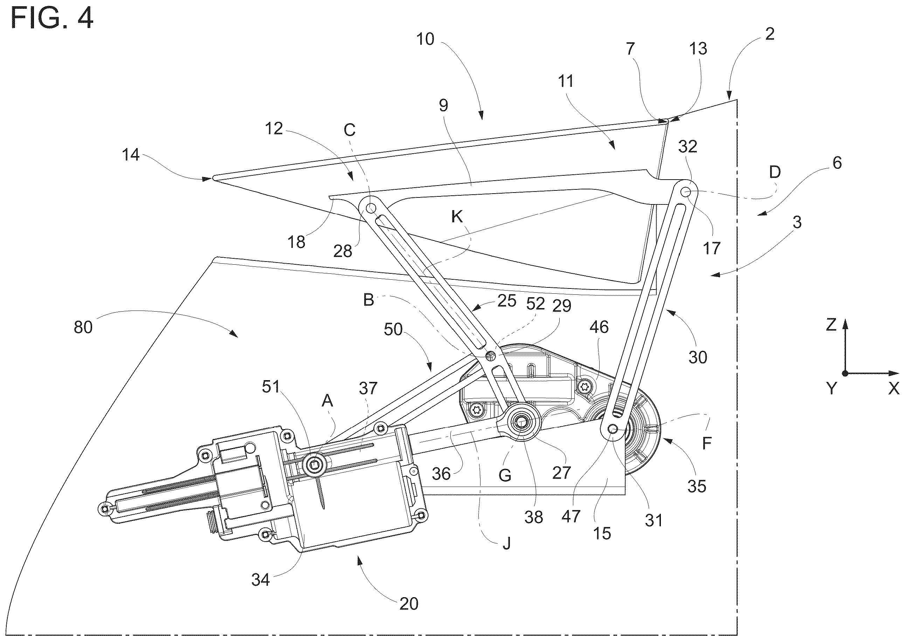

The third position, shown in Figure 4, is intermediate between the neutral position and the first operating position, i.e. the airfoil 10 is rotated around the axis D by a first angle in the third position lower than the second angle by which it is rotated in the second operating position.

Once the airfoil 10 is in the third position, the control unit 60 commands the actuator 20 to remain deactivated and the actuator 35 to rotate the lever 30 around the axis D counterclockwise (Figure 4).

Consequently, the airfoil 10 slides behind the edge 7 until it reaches the second operating position, shown in Figure 5.

Alternatively, the control unit 60 can command the actuator 35 to rotate the lever 30 around the axis D counterclockwise, during the actuation of the actuator 20, i.e. during the reduction of the free length of the piston 36 on the outside of the case 37.

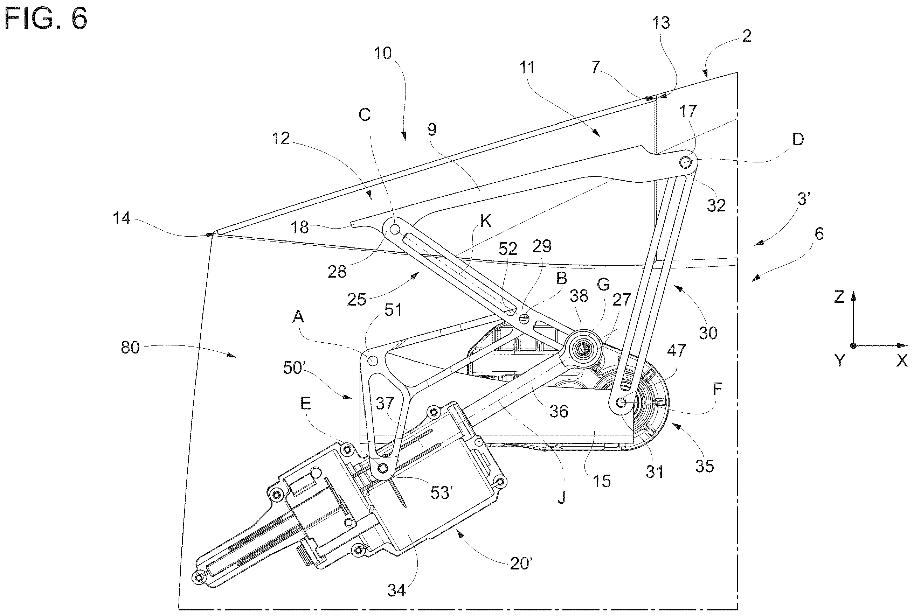

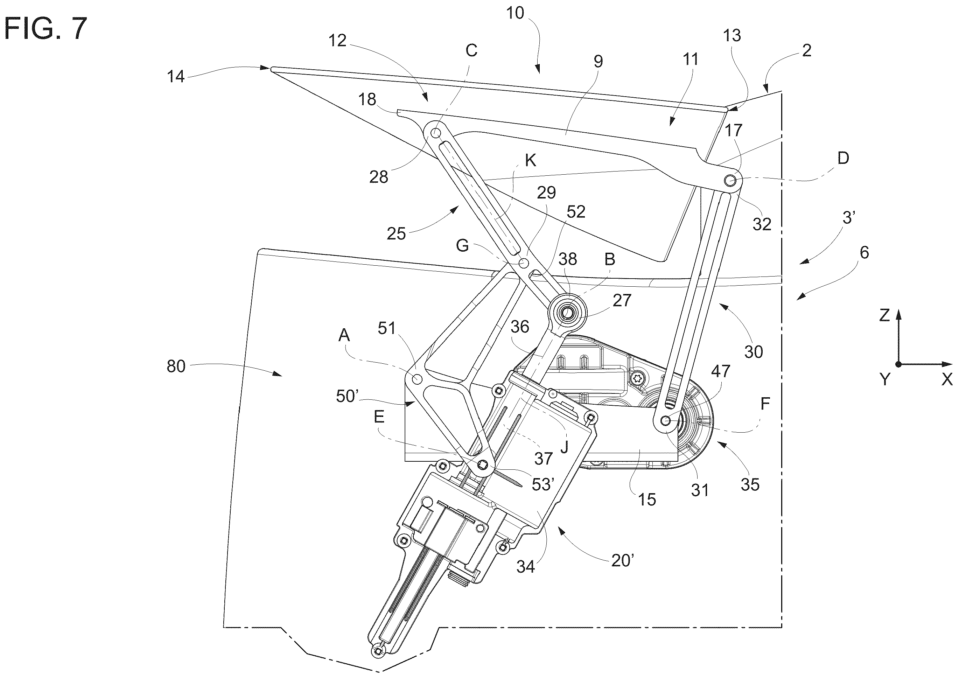

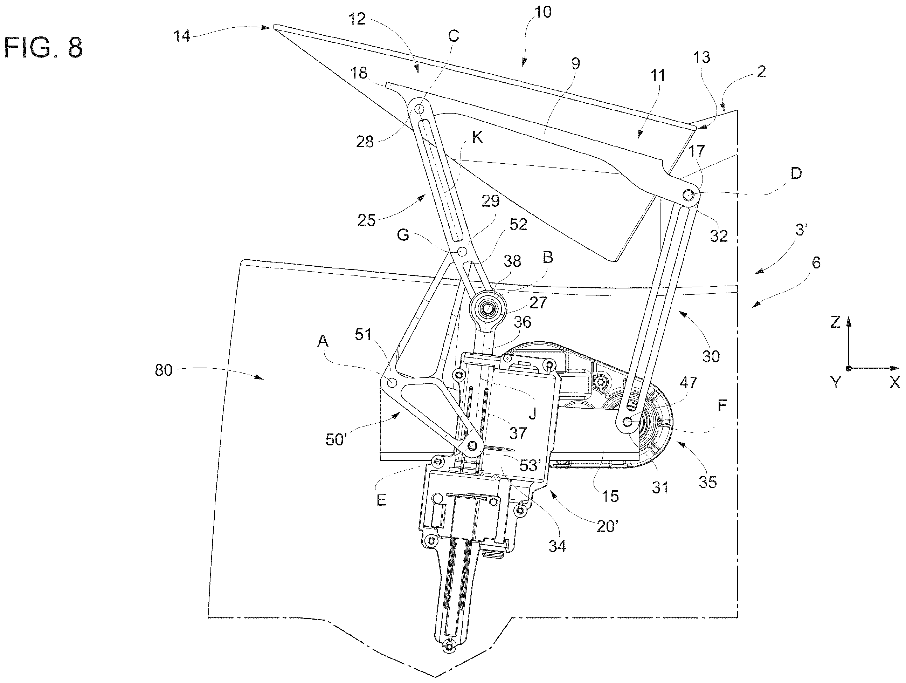

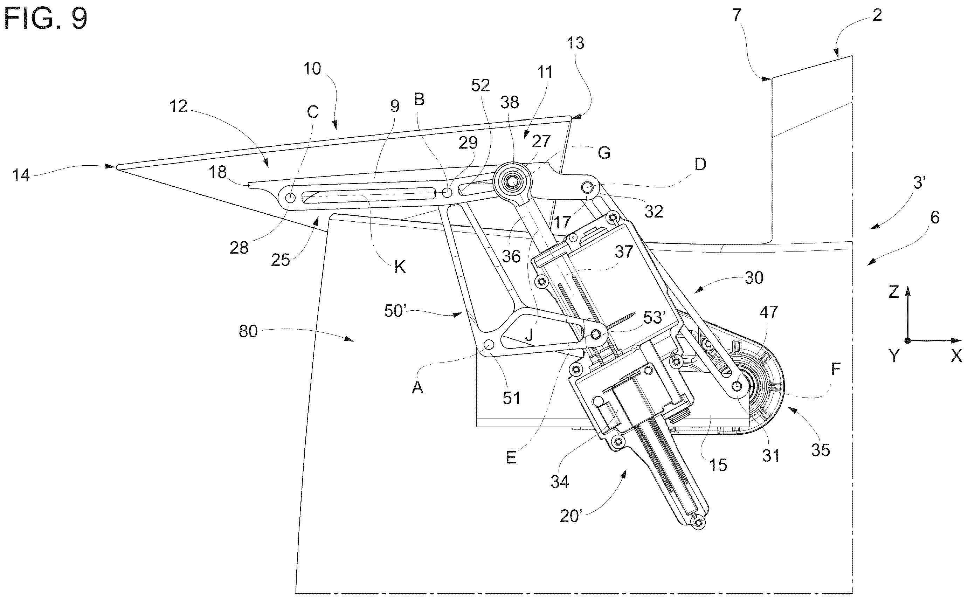

With reference to Figures 6 to 9, 3' denotes a moving assembly 10 for moving an airfoil according to a second embodiment of the invention.

The moving assembly 3' is similar to the moving assembly 3 and will be described below only insofar as it differs from the latter; equal or equivalent parts of the cars 1, 1' will be marked, where possible, by the same reference numerals.

In particular, the moving assembly 3' differs from the moving assembly 3 in that:
- the lever 50' comprises a further free end 53'; and
- the actuator 20' is hinged to the end 53' of the lever 50' around an axis E parallel to the axes A, B, C, D, F, G.

In other words, the actuator 20' is articulated on the bracket 15 so as to rotate eccentrically around the axis A.

The operation of the assembly 3' is similar to that of the assembly 3 and is described only insofar as it differs from it.

In particular, the assembly 3' differs from the assembly 3 in that the actuation of the actuator 20' determines its rotation around the axis E, which is distinct from the axis A.

From an examination of the assembly 3, 3' and of the method according to the present invention, the advantages that it allows obtaining are evident.

In particular, the assembly 3, 3' comprises:
- the linear actuator 20, 20' articulated on the bracket 15;
- the lever 25 hinged to the portion 12 of the airfoil 10 around the axis C and operatively connected to the actuator 20;
- the lever 30 articulated on the bracket 15 around the axis F and the portion 11 of the airfoil 10 around the axis D; and
- the actuator 35 which can be operated to rotate the lever with respect to the bracket 15 around the axis F.

The piston 36 hinged to the lever 25 around the axis G and the case 37 are telescopically coupled to one another according to the axis J.

In this way, the control unit 60 selectively:
- moves the airfoil 10 from the neutral position to the first operating position and raises the downforce acting on the motor vehicle 1, operating the actuator 20' and keeping the actuator 35 deactivated; or
- moves the airfoil 10 from the neutral position to the second operating position and reduces the drag acting on the motor vehicle 1, by operating at first the actuator 20' keeping the actuator 35 deactivated and then operating the actuator 35 or the actuator 20' keeping the actuator 35 deactivated and then operating the actuator 35 keeping the actuator 20 deactivated.

It is thus possible to use the same airfoil 10 and the same the assembly 3, 3' both to increase the downforce in curvilinear stretches or in the event of braking and to reduce the drag during travel to increase maximum speed or reduce consumption and consequently increase autonomy.

Finally, it is clear that modifications and variants can be made to the assembly 3, 3' according to the present invention which, however, do not fall outside the scope of protection defined by the claims.

In particular, the motor vehicle 1 could comprise two moving assemblies 3 or two moving assemblies 3' if the downforce acting on the airfoil 10 were particularly high.

## Claims

1. A moving assembly (3, 3') for moving an airfoil (10) of a car (1), comprising:
- an airfoil (10) comprising, in turn, a first portion (11) and a second portion (12);
- a support structure (15), which can be fixed to said motor vehicle (1) and with respect to which said airfoil (10) is movable to vary its angle of attack with respect to the air;
**characterized in that** it comprises:
- a first actuator (20, 20') articulated on said support structure (15);
- a first lever (25) operatively connected to said second portion (12) of said airfoil (10) and to said first actuator (20, 20');
- a second lever (30) articulated on said support structure (15) and on which said first portion (11) of said airfoil (10) is articulated; and
- a second actuator (35), which can be operated to determine the rotation of said second lever (30) with respect to said support structure (15);
said first actuator (20, 20') comprising a case (37) and a piston (36) telescopically coupled to one another according to a first axis (J); said first lever (25) being articulated on said piston (36).

2. The assembly according to claim 1, **characterized in that** it comprises a third lever (50) articulated on said support structure (15) and on which said first lever (25) and said case (37) of said first actuator (20, 20') are articulated.

3. The assembly according to claim 2, **characterized in that** said third lever (50) is hinged on said support structure (15) and is hinged to a segment (29) of said first lever (25).

4. The assembly according to claim 3, **characterized in that** said third lever (50) is hinged to said support structure (15) around a second axis (A) orthogonal to said first axis (J).

5. The assembly according to claim 4, **characterized in that** said case (37) of said first actuator (20, 20') is hinged to said third lever (50) around a third axis (E), which is parallel to and spaced apart from said second axis (A).

6. The assembly according to claim 4, **characterized in that** said case (37) is hinged to said support structure (10) around said second axis (A).

7. The assembly according to any one of the claims from 4 to 6, **characterized in that**:
- said first lever (25) is hinged to said second portion (12) of said airfoil (10) around a fourth axis (C);
- said third lever (50) is hinged to said first portion (11) of said airfoil (10) around a fifth axis (D) arranged, in use, in front of said fourth axis (C);
- said piston (36) is hinged to said first lever (25) around a sixth axis (G); and
- said second actuator (35) can be operated to determine the rotation of said second lever (30) around a seventh axis (F);
said second, third, fourth, fifth, sixth and seventh axes (A, E, C, D, G, F) being parallel to one another and orthogonal to said first and eighth axes (J, K).

8. A motor vehicle comprising:
- a body (2) comprising, in turn, a front (5) and a rear (6);
- said airfoil (10), which is movable relative to said body (2) between:
a neutral position, in which it is flush with said body (2), and a first operating position, in which an angle of attack of said airfoil (10) assumes a first value; and
said neutral position and a first operating position, in which said angle of attack of said airfoil (10) assumes a second value different from said first value; and
- an assembly (3, 3') according to any one of the preceding claims:
said airfoil (10) being rotated around said fifth axis (D) in said first operating position with respect to said neutral position;
said airfoil (10) being spaced apart from said body (2) in said second operating position with respect to said neutral position;
said motor vehicle (1) further comprising:
- a control unit (60) programmed to receive, as an input, a first command associated with the fact that an increase in the downforce generated by said airfoil (10) was requested and a second command associated with the fact that a reduction in the drag generated by said airfoil (10) was requested;
said control unit (60) being programmed to:
- control said first actuator (20, 20') so as to vary the length of said piston (36) on the outside of said case (37) along said first axis (Z) and keep said second actuator (35) deactivated following receipt of said first command, so as to determine the rotation of said airfoil (10) around said fifth axis (D) and place said airfoil (10) in said first operating position, with which a first value of said angle of attack is associated; and
- control said first actuator (20, 20') so as to vary the length of said piston (36) on the outside of said case (37) along said first axis (Z) and control said second actuator (35) so as to determine the rotation of said third lever (50) following receipt of said second command, so as to determine the rotation of said airfoil (10) around said fifth axis (D) and bring said fifth axis (D) closer to said second axis (A) so as to place said airfoil in said second operating position.

9. The motor vehicle according to claim 8, **characterized in that** said control unit (60) is programmed to keep said second actuator (35) at first deactivated and then active during the length variation of said piston (36) with respect to said case (37), following receipt of said second command;
and/or **characterized in that** said control unit (60) is programmed to keep said second actuator (35) active during the entire length variation of said piston (36) with respect to said case (37), following receipt of said second command.

10. The motor vehicle according to claim 8 or 9, **characterized in that** said airfoil (10) is movable with respect to said rear (6) of said body (2) between said neutral position and said first and second operating position;
said fourth axis (C) being arranged behind said fifth axis (D) and said second axis (A) being arranged behind said seventh axis (F), with reference to a normal travel direction of said motor vehicle (1) from said rear (6) to said front (5);
said first actuator (20, 20') being configured so that the reduction of said free length of said piston (36) on the outside of said case (37) determines, in use, the rotation of said first actuator (20, 20') in a first direction around said second axis (A) and the lifting of said second portion (12) with respect to said first portion (11);
said second actuator (35) being configured so that the rotation of said second lever (30) around said seventh axis (F) in said first direction determines, in use, the sliding of said airfoil (10) behind said body (2), with reference to a normal travel direction of said motor vehicle (1) from said rear (6) to said front (5).

11. A method for adjusting the angle of attack of an airfoil (10) of a motor vehicle (1);
said motor vehicle (1) comprising, in turn:
- a body (2) with a front (5) and a rear (6);
- said airfoil (10), which is arranged at said rear (6) of said body (2), is movable with respect to said rear (6) and comprises a first and a second portion (11, 12);
- a moving assembly (3, 3') designed to move said airfoil (10) between:
a first neutral position;
a first operating position, in which it has a first value of the angle of attack; and
a second operating position, in which it has a second value of the angle of attack;
said assembly (3, 3') comprising, in turn:
- a support structure (15), which can be fixed to said body (2);
- a first actuator (20, 20') articulated on said support structure (15) in the area of a first axis (A);
- a first lever (25) operatively connected to said second portion (12) of said airfoil (10) and to said first actuator (20, 20');
- a second lever (30) articulated on said support structure (11) and on which said first portion (11) of said airfoil (10) is articulated in the area of a second axis (D); and
- a second actuator (35), which can be operated to determine the rotation of said second lever (30) with respect to said support structure (15);
said first actuator (20, 20') comprising a case (37) and a piston (36) telescopically coupled to one another according to a third axis (J); said first lever (25) being articulated on said piston (36);
**characterized in that** it comprises the steps of:
i) generating a first control signal, if it is necessary to increase the downforce generated by said airfoil (10);
ii) generating a second control signal, if it is necessary to reduce the drag generated by said airfoil (10);
iii) controlling said first actuator (20, 20') so as to move said piston (36) on the outside of said case (37) along said third axis (J) and keeping said second actuator (35) deactivated following receipt of said first command, so as to determine the rotation of said airfoil (10) around said second axis (D) and place said airfoil (10) in said first operating position; and
iv) controlling said first actuator (20, 20') so as to move said piston (36) on the outside of said case (37) along said third axis (Z) and controlling said second actuator (35) so as to determine the rotation of said third lever (50) following receipt of said second command, so as to determine the rotation of said airfoil (10) around said second axis (D) and the movement of said second axis (D) towards said first axis (A) and place said airfoil in said second operating position.

12. The method according to claim 11, **characterized in that** said step ii) comprises the step iii) of keeping said second actuator (35) at first deactivated and then active during the movement of said piston (36) with respect to said case (37), following receipt of said second command;
and/or **in that** said step ii) comprises step iv) of activating the second actuator (35), following receipt of said second command, simultaneously with the entire movement of said piston (36) with respect to said case (37).
